(19) Europäisches Patentamt
European Patent Office
Office européen des brevets

(11) **EP 3 557 771 B1**

(12) **EUROPEAN PATENT SPECIFICATION**

(45) Date of publication and mention
of the grant of the patent:
**08.09.2021 Bulletin 2021/36**

(21) Application number: **17882147.6**

(22) Date of filing: **23.05.2017**

(51) Int Cl.:
*H04B 1/7115* *(2018.01)*    *H04B 7/08* *(2006.01)*

(86) International application number:
**PCT/CN2017/085544**

(87) International publication number:
**WO 2018/107664 (21.06.2018 Gazette 2018/25)**

(54) **INTERFERENCE SUPPRESSION METHOD AND DEVICE, AND COMPUTER STORAGE MEDIUM**

INTERFERENZUNTERDRÜCKUNGSVERFAHREN UND -VORRICHTUNG SOWIE COMPUTERSPEICHERMEDIUM

PROCÉDÉ ET DISPOSITIF DE SUPPRESSION DE BROUILLAGE, ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2016 CN 201611146831**

(43) Date of publication of application:
**23.10.2019 Bulletin 2019/43**

(73) Proprietor: **Sanechips Technology Co., Ltd.**
**Shenzhen, Guangdong 518055 (CN)**

(72) Inventor: **ZOU, Fei**
**Shenzhen**
**Guangdong 518055 (CN)**

(74) Representative: **Aipex B.V.**
**P.O. Box 30223**
**3001 DE Rotterdam (NL)**

(56) References cited:
**WO-A1-2013/025134      CN-A- 102 104 562**
**CN-A- 103 825 847      CN-A- 105 959 049**
**US-A1- 2015 049 829**

• **THORSTEN CLEVORN ET AL: "Low-Complexity Finger-Wise Interference Cancellation for Rake Receivers with Receive Diversity", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-5, XP031770171, ISBN: 978-1-4244-3573-9**

**Description**

**TECHNICAL FIELD**

The present invention relates to anti-interference technology in the field of communications and, in particular, an interference suppression method, device and computer storage medium.

**BACKGROUND**

Communication demand from users has an explosive growth, which promotes continuous development of wireless transmission technology, and various new technologies and methods have been continuously applied. Multi-antenna array technology has been widely used in 3rd generation partnership project (3GPP). However, in actual practice, a user may be interfered by other users in this cell or neighbor cells, which will seriously reduce demodulation performance of data channels. In order to ensure the demodulation performance, signal-to-noise ratio of receiving signal is improved to reduce interference influence. In actual practice, maximal ratio combining (MRC) and interference rejection combining (IRC) are two technologies commonly used for improving the signal-to-noise ratio.

Compared with traditional MRC technology, the IRC technology is a technology of RAKE receiver which is more advanced. The RAKE receiver considers both temporal interference and spatial characteristic. Therefore, anti-interference performance is obviously improved, uplink signal quality is significantly improved, and demodulation performance of uplink signal is improved. The key to suppress interference with IRC algorithm is to obtain a correlation matrix and a weight vector of interference and noise. Accurate acquisition of correlation characteristics of interference and noise will have great influence on performance of the IRC algorithm. A better gain can be obtained by calculating a correlation matrix of interference and noise for each user and inverting the correlation matrix. However, the RAKE receiver on entire building baseband unit (BBU) needs to handle a large number of users. If the correlation matrix of interference and noise is calculated and inverted for each user, the entire system will have extremely high computational complexity and can hardly be realized.

Document WO2013025134 A1 discloses a receiver unit having at least one antenna input for receiving multipath radio signals via a radio unit and at least one antenna from one or more user equipments. The receiver unit comprises: a despreading unit configured to despread a multipath radio signal in the received multipath radio signals using a number of despreading fingers corresponding to a number of delay positions in the multipath radio signal which corresponds to a number of paths in the multipath radio signal, and a combining unit configured to apply at least one weight to the output of each of the number of allocated despreading fingers and combine the weighted outputs into a resulting equalized radio signal. The receiver unit is characterised in that it is configured to calculate auto-correlation values based on all multipath radio signals received at the at least one antenna input, determine at least one auto-correlation value based on the calculated auto-correlation values, determine at least one time value based on the at least one determined auto-correlation value, and allocate at least one interference suppression finger to a delay position in the multipath radio signal based on the at least one determined time value. The invention further relates to a receiver, a network node and a method for suppressing interference in a received multipath radio signal in a receiver unit.

T. Clevorn et al. "Low-Complexity Finger-Wise Interference Cancellation for Rake Receivers with Receive Diversity", 2010 IEEE 72nd Vehicular Technology Conference - Fall, 2010, pp. 1-5, discloses a novel powerful yet simple interference cancellation algorithm for receive diversity systems. The algorithm for Rake receivers is based on the correlation between the identical multi-path delays occurring on the antennas. The attractive simplicity is due to the separate handling of different Rake fingers yielding a low complexity with the lack of large matrices. Nevertheless, the new algorithm exhibits an excellence performance, which is proven by simulation results.

**SUMMARY**

In order solve the above technical problem, the invention is defined by an interference suppression method, device and computer storage medium, according to the independent claims, so as to solve the problem of the extremely high computational complexity in the IRC processing of a RAKE receiver on the BBU side. Preferred embodiments are provided in the dependent claims.

According to the interference suppression method, device and computer storage medium provided by the embodiments of the present invention, the problem of high computational complexity in the IRC processing of a RAKE receiver on the BBU side can be solved, so that the computational complexity can be greatly reduced and the demodulation performance of the uplink data channel can be greatly improved.

**BRIEF DESCRIPTION OF DRAWINGS**

FIG. 1 is a flowchart of an interference suppression method according to an embodiment of the present invention.
FIG. 2 is a schematic diagram of a successful multipath matching with 4 antennas according to an embodiment of the present invention.
FIG. 3 is a schematic diagram of multipath matching with 4 antennas according to an embodiment of the present invention.
FIG. 4 is a flowchart of multipath matching with 4 antennas according to an embodiment of the present invention.
FIG. 5 is an exemplary diagram of multipath delay of a specific user according to an embodiment of the present invention.
FIG. 6 is a schematic diagram of an autocorrelation inverse matrix of a specific user signal with 4 antennas according to an embodiment of the present invention.
FIG. 7 is a schematic diagram of a successful multipath matching with 2 antennas according to an example.
FIG. 8 is a schematic diagram of multipath matching with 2 antennas according to an example.
FIG. 9 is a flowchart of calculating an autocorrelation inverse matrix of a specific user with 2 antennas according to an example.
FIG. 10 is a simulated comparison diagram of RAKE and RAKE_IRC with a ratio of 6 dB of interference user to benefited user according to an example.
FIG. 11 is a block diagram of architecture for implementing the interference suppression method according to an example.
FIG. 12 is a block diagram of an interference suppression device according to an embodiment of the present invention.

**DETAILED DESCRIPTION**

In order to make technical content and features of embodiments in the present invention clearer, the embodiments of the present invention will be described hereinafter in conjunction with the drawings. All the drawings are used for reference, but not for limitation of the embodiments in the present invention.

Embodiment 1

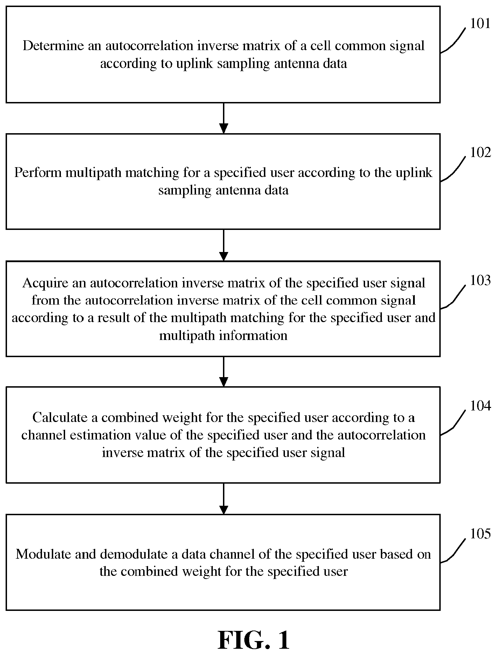

FIG. 1 is a flowchart of an interference suppression method according to an embodiment of the present invention. The method is applied on the building baseband unit (BBU) side. As shown in FIG. 1, the method includes steps described below.
In step 101, an autocorrelation inverse matrix of a cell common signal is determined according to uplink sampling antenna data.
Here, the uplink sampling antenna data includes antenna data of a sampling uplink. The antenna described herein generally refers to a receiving antenna.
In this embodiment, the autocorrelation inverse matrix of the cell common signal refers to an autocorrelation inverse matrix of each slot common signal of a remote radio unit (RRU).
Generally, an optical fiber is used for transmission between BBU and RRU, and the RRU is connected to an antenna through coaxial cables and power dividers (couplers). In other words, the optical fiber is applied to a trunk while a coaxial cable is applied to a branch. For a downlink direction, the optical fiber directly connects the BBU to the RRU, and baseband digital signals are transmitted between the BBU and the RRU. In this way, a base station may control signals of a user to be transmitted on a specific RRU channel, which will greatly reduce interference of users on other channels in the cell. For an uplink direction, signals from a mobile phone signals of the user are received on a nearest channel and then transmitted to the base station on this channel through an optical fiber, which can also greatly reduce interference between users on different channels.
In an optional embodiment, the step in which the autocorrelation inverse matrix of the cell common signal is determined according to the uplink sampling antenna data includes steps described below.
In step 101a, an autocorrelation matrix of the cell common signal is calculated according to the uplink sampling antenna data.
In step 101b, the autocorrelation inverse matrix of the cell common signal is obtained according to the autocorrelation matrix of the cell common signal.
That is, the autocorrelation matrix of the cell common signal is calculated first, and then the autocorrelation inverse matrix of the cell common signal is calculated according to the autocorrelation matrix of the cell common signal.
In step 102, multipath matching for a specified user is performed according to the uplink sampling antenna data.

Optionally, the step in which the multipath matching for the specified user is performed according to the uplink sampling antenna data is implemented:

before the autocorrelation matrix of the cell common signal is calculated according to the uplink sampling antenna data; or

after the autocorrelation inverse matrix of the cell common signal is obtained according to the autocorrelation matrix of the cell common signal; or

before the autocorrelation inverse matrix of the cell common signal is obtained according to the autocorrelation matrix of the cell common signal, and after the autocorrelation matrix of the cell common signal is calculated according to the uplink sampling antenna data; or

at the same time as the autocorrelation inverse matrix of the cell common signal is obtained according to the autocorrelation matrix of the cell common signal and the autocorrelation matrix of the cell common signal is calculated according to the uplink sampling antenna data.

That is to say, the step 102 and the step 101 are executed in following sequences:

the step 102 is implemented before the step 101a; or
the step 102 is implemented after the step 101b; or
the step 102 is implemented after the step 101a and before 101b; or
the step 102 is simultaneously implemented with the step 101a and 101b.

In an embodiment, the step in which the multipath matching for the specified user is performed according to the uplink sampling antenna data includes steps described below.
One or more multipaths with same delay are searched for on multiple antennas of the specified user in the cell; and
the multipaths with the same delay are stored in a same structure, wherein each multipath information is stored in one structure.
Here, the specified user refers to a RAKE user corresponding to a RRU, and the multipath matching is used for a purpose of finding one or more multipaths with same delay on N antennas.
As an example, after multipath matching is performed for the specified user according to the uplink sampling antenna data, the method further includes steps described below.
N structures matched with the antenna number N are arranged for storing multipath matching results.
One of the structures is used for storing information of the one or more multipaths failing in the multipath matching, while the rest N-1 structures are used for storing information of the one or more multipaths succeeding in the multipath matching with different numbers of successful matching.
A multipath accuracy of 1/8 chip and an antenna number of 4 are taken as an example for illustration below.

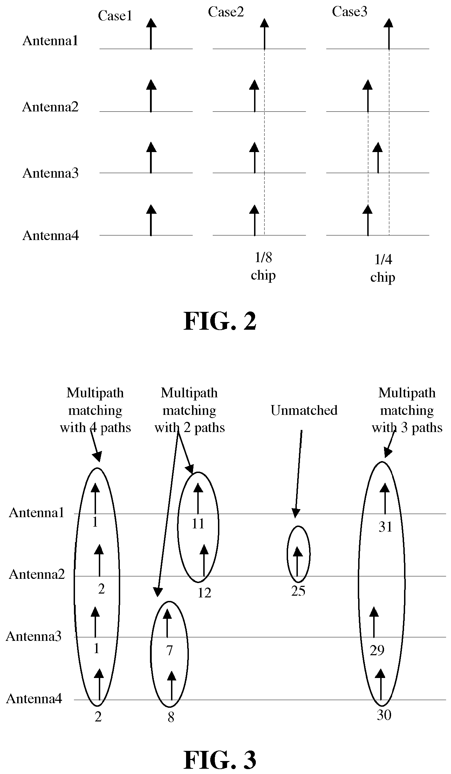

FIG. 2 shows a schematic diagram of a successful multipath matching with 4 antennas. Three possible cases of the successful matching are shown in FIG. 2. That is, a case where the delay on 4 antennas has a maximum deviation equal to or less than 1/4 chips is considered as a success. In actual systems, a probability of successful matching with 4 multipaths is small. More often, a case where the delay on 3 multipaths or 2 multipaths has a deviation equal to or less than 1/4 chips is considered as partial matching.
FIG. 3 shows a schematic diagram of multipath matching with 4 antennas. As shown in FIG. 3, one group has a successful matching of 4 multipaths, one group has a successful matching of 3 multipaths, two groups have a successful matching of 2 multipaths, and one multipath on antenna 2 has not been successfully matched.
Specifically, delays on paths of antenna 1, delays on paths of antenna 2, delays on paths of antenna 3 and delays on paths of antenna 4 form vectors of *delay*1, *delay*2, *delay*3 and *delay*4 respectively. Four structures of *match*1, *match*2, *match*3 and *match*4 are defined. Information of one or more multipaths failing in the multipath matching is stored in *match*1; information of 2 multipaths succeeding in the multipath matching is stored in *match*2; information of 3 multipaths succeeding in the multipath matching is stored in *match*3; and information of 4 multipaths succeeding in the multipath matching is stored in *match*4. Each piece of multipath information may only be stored in one structure. That is, the multipaths in the 4 multipaths succeeding in the multipath matching may no longer be used for matching with 2 multipaths or 3 multipaths, and so on.

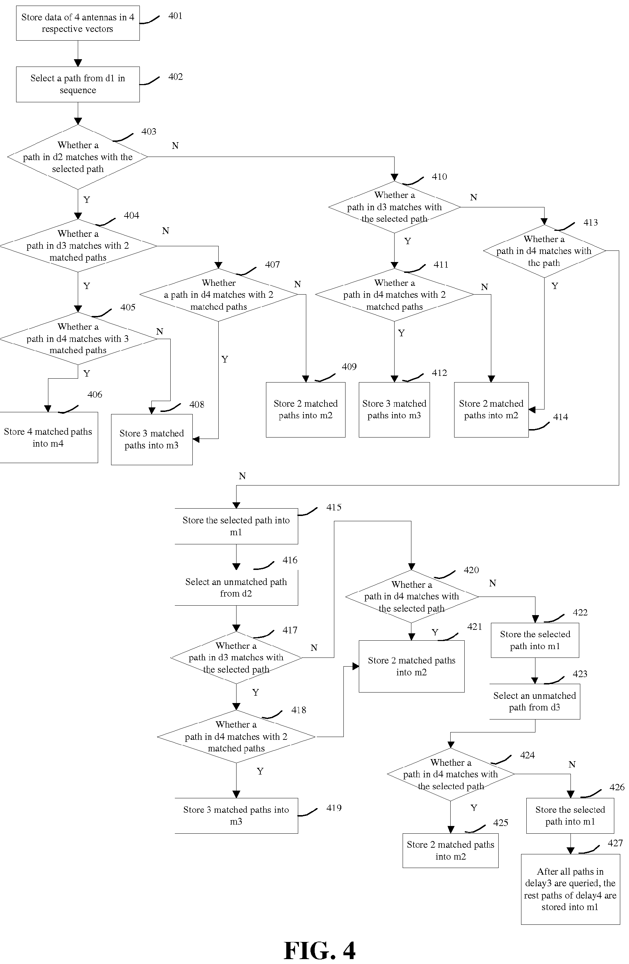

FIG. 4 is a flowchart of multipath matching with 4 antennas according to an embodiment of the present invention. As shown in FIG. 4, the flowchart mainly includes steps described below.
In step 401, data of 4 antennas is stored in 4 vectors respectively, and then step 402 is executed.

In step 402, a path is selected from delay1 in sequence, and then step 403 is executed. In FIG. 4, delay1 is denoted as d1.

In step 403, whether delay2 has a path matching with the selected path is determined. If yes, step 404 is executed; if not, step 410 is executed. In FIG. 4, delay2 is denoted as d2.

In step 404, whether delay3 has a path matching with the two matched paths is determined. If yes, step 405 is executed; if not, step 407 is executed. In FIG. 4, delay3 is denoted as d3.

In step 405, whether delay4 has a path matching with the three matched paths is determined. If yes, step 406 is executed; if not, step 408 is executed. In FIG. 4, delay4 is denoted as d4.

In step 406, the four matched paths are stored into match4. In FIG. 4, match4 is denoted as m4.

In step 407, whether delay4 has a path matching with two matched paths is determined. If yes, step 408 is executed; if not, step 409 is executed.

In step 408, the three matched paths are stored into match3. In FIG. 4, match3 is denoted as m3.

In step 409, the two matched paths are stored into match2. In FIG. 4, match4 is denoted as m2.

In step 410, whether delay3 has a path matching with the selected path is determined. If yes, step 411 is executed; if not, step 413 is executed.

In step 411, whether delay4 has a path matching with the two matched paths is determined. If yes, step 412 is executed; if not, step 413 is executed.

In step 412, the three matched paths are stored into match3.

In step 413, whether delay4 has a path matching with the selected path is determined. If yes, step 414 is executed; if not, step 415 is executed.

In step 414, the two matched paths are stored into match2.

In step 415, the selected path is stored into match1, then step 416 is executed. In FIG. 4, match1 is denoted as m1.

In step 416, an unmatched path is selected from delay2, and then step 417 is executed.

In step 417, whether delay3 has a path matching with the selected path is determined. If yes, step 418 is executed; if not, step 420 is executed.

In step 418, whether delay4 has a path matching with the two matched paths is determined. If yes, step 419 is executed; if not, step 421 is executed;

In step 419, the three matched paths are stored into match3.

In step 420, whether delay4 has a path matching with the selected path is determined. If yes, step 421 is executed; if not, step 422 is executed.

In step 421, the two matched paths are stored into match2.

In step 422, the selected path is stored into match1, then step 423 is executed.

In step 423, an unmatched path is selected from delay3, and then step 424 is executed.

In step 424, whether delay4 has a path matching with the selected path is determined. If yes, step 425 is executed; if not, step 426 is executed.

In step 425, the two matched paths are stored into match2.

In step 426, the path is stored into match1, then step 427 is executed.

In step 427, after all paths in delay3 are queried, the rest paths of delay4 are stored into match1.

Generally, there are many RAKE users corresponding to a same RRU, and it is impossible to calculate and inverse a correlation matrix of interference and noise for each RAKE user separately, which makes the entire system to have extremely high computational complexity and cannot be realized. All RAKE users corresponding to the same RRU share data of multiple antennas on the RRU. The data of the antennas may be used for calculating an autocorrelation matrix of a receiving signal, which is considered as an approximate estimate of a correlation matrix of interference and noise. Then the autocorrelation inverse matrix may be obtained.

In order to share a correlation inverse matrix of a signal among all RAKE users corresponding to the same RRU, the autocorrelation matrix of the cell common signal in step 101a should cover multipath delay of all RAKE users.

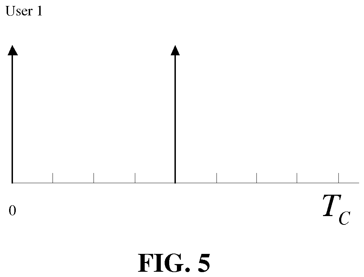

FIG. 5 is an exemplary diagram of multipath delay of a specific user according to an embodiment of the present invention. $T_C$ is a chip period in FIG. 5. Assuming user 1 as the specific user, user 1 has two paths of time 0 and 1/2 with a unit of the chip period. According to a conventional method, when user 1 estimates a correlation of a first multipath itself, the chip of time 0 is sampled and multiplied by its own conjugate, and average is calculated among the product of the multiplication with other products corresponding to time pairs of (1,1), (2,2), etc., so as to obtain an autocorrelation of the first multipath. The autocorrelation may be recorded as R(0,0), where the first index represents sampling phase and the second index represents a lag between samples of two chips. For second multipath, user 1 will calculate an average of products corresponding to time pairs of (1/2,1/2), (3/2,3/2), etc. Samples in the past may also be used here, so as to make R(x,y) periodic on x, where the period is 1.

Processing accuracy of 1/Y chip and N antennas are taken as an example for illustration below.

If there are Y samples on each chip, then Y values should be considered for x, i.e., x=0, x=1/Y, x=2/Y, x=3/Y, ..., x=(Y-1)/Y. First, all antenna diversity signals at a same multipath delay position need to be combined, so an autocorrelation matrix of all antenna diversity signals at a multipath delay position needs to be calculated. Taking FIG. 5 as an example, assuming there are N receiving antennas, all antenna diversity signals on a multipath delay position $\tau$ is $r(\tau) = [r_1(\tau)\ r_2(\tau) ... r_N(\tau)]^T$; then, an autocorrelation matrix of all antenna diversity signals at the multipath delay position $\tau$ is $R(\tau) = r(\tau) * r^H(\tau)$, which is a N*N square matrix. Because of $R(\tau) = R(\tau + T_C)$, i.e. the chip period serves as a cycle period, so $R(\tau)$ is used to cover multipath positions of all RAKE users, where $\tau \in [0, T_C)$.

Multipath delay of all RAKE users may be mapped into $[0 \quad \frac{1}{Y}chip \quad ... \quad \frac{Y-1}{Y}chip]^T$, an autocorrelation matrix of antenna diversity signals at each multipath delay position is obtained from $R(i_S)$, where $i_S \in \{0, 1, ... Y\}$. For a specific RAKE user, if delay on a multipath is $\tau$, a mapping relationship is obtained as follows:

$$i_S = \mathrm{mod}(\tau, Y) \qquad\qquad\qquad \text{(Equation 1)}$$

where, $i_S \in \{0, 1, ... Y\}$ is corresponding to sampling positions of $[0 \quad \frac{1}{Y}chip \quad ... \quad \frac{Y-1}{Y}chip]^T$ on each chip.

Optionally, the autocorrelation matrix of the cell common signal may be calculated once per slot.

It is assumed that $z_U(k, i_A)$ as all valid antenna data by Y-times sampling in a slot, where $k \in [0, 2560*Y-1]$ is a sample index of antenna data; $i_A \in \{1, 2, ..., N\}$ is an antenna index. It is assumed that, in this slot, data of N antennas with a sample index of $k_U$ constructs a vector:

$$u(k_U) = [z_U(k_U, 1) \quad ... \quad z_U(k_U, N)]^T.$$

An autocorrelation matrix corresponding to this vector is:

$$R(k_U) = u(k_U) * u^H(k_U) = \begin{bmatrix} |z_U(k_U, 1)|^2 & ... & z_U(k_U, 1) * z_U^{\ *}(k_U, N) \\ ... & ... & ... \\ z_U^{\ *}(k_U, 1) * z_U(k_U, N) & ... & |z_U(k_U, N)|^2 \end{bmatrix}.$$

Assuming each slot contains 2560 chips, after the autocorrelation matrices of the signals at Y sampling positions on each chip are calculated respectively, and 2560 matrices at each sampling position are averaged to obtain the autocorrelation matrix of the slot common signal:

$$R\_rake_{tmp}(i_S) = \frac{\sum_{i_C=0}^{2559}(i_S + i_C * Y)}{2560},$$

where $i_S \in \{0, 1, ..., Y\}$ is a sampling position index, and $i_C$ is a chip index.

Here, the calculated result $R\_rake_{tmp}(i_S)$ may not only represent the autocorrelation matrix of the signals on N antennas, but also include results of autocorrelation calculation of signals on respective N antennas. Then, calculation of the autocorrelation inverse matrix of the common signal needs to be implemented separately according to the number of antennas.

It is assumed that in this slot, the autocorrelation matrix of the common signal at a specified sampling position

$$A = \begin{bmatrix} a_{11} & a_{12} & ... & a_{1N} \\ a_{21} & a_{22} & ... & a_{2N} \\ ... & ... & ... & ... \\ a_{N1} & a_{N2} & ... & a_{NN} \end{bmatrix}.$$

is $\qquad$ According to the above-mentioned content, $a_{11}$ corresponds to an autocorrelation matrix of a signal on antenna 1, $a_{22}$ corresponds to an autocorrelation matrix of a signal on antenna 2, and $a_{NN}$ corresponds to an autocorrelation matrix of a signal on antenna N. For a case with one antenna, an autocorrelation inverse matrix of a signal is calculated from a reciprocal of $a_{11}$ or $a_{22}$ according to an antenna index, such as

$$A_{ant1}^{-1} = \frac{1}{a_{11}}, \quad A_{ant2}^{-1} = \frac{1}{a_{22}}.$$

According to the antenna index, the autocorrelation inverse matrices on two antennas at the sampling position are arranged according to antenna index to form a vector:

$$A_1^{-1} = \begin{bmatrix} A_{ant1}^{-1} & ... & A_{antN}^{-1} \end{bmatrix}.$$

The $A_1^{-1}$ obtained at different sampling positions in this slot are stored according to the sampling positions to obtain a Y*2 matrix, i.e., $invR1_{tmp}(i_S)$.

The autocorrelation inverse matrix of the signal on N antennas is calculated using a following equation:

$$A^{-1} = \frac{1}{|A|} A^*, \text{ where } A^* = (A_{ij})_{n \times n}.$$

The $A_1^{-1}$ obtained at different sampling positions in this slot are stored according to the sampling positions to obtain a Y*2*2 matrix, i.e., $invR2_{tmp}(i_S)$.

In step 103, an autocorrelation inverse matrix of the specified user signal is acquired from the autocorrelation inverse matrix of the cell common signal according to a result of the multipath matching for the specified user and multipath information.

According to the invention, the step in which the autocorrelation inverse matrix of the specified user signal is acquired from the autocorrelation inverse matrix of the cell common signal according to the result of the multipath matching for the specified user and the multipath information includes steps described below.

A sampling position is calculated according to the result of the multipath matching for the specified user and the multipath information; and

the autocorrelation inverse matrix of the specified user signal is selected at the sampling position from the autocorrelation inverse matrix of the cell common signal according to the sampling position and in combination with an antenna index.

In a specific embodiment, the step in which the sampling position is calculated according to the result of the multipath matching for the specified user and the multipath information includes a step described below.

For more than one multipath succeeding in the multipath matching for the specified user, the sampling position is obtained according to a delay relationship among the more than one multipath succeeding in the multipath matching for the specified user; or

for a multipath failing in the multipath matching for the specified user, the sampling position is obtained according to multipath delay on the multipath failing in the multipath matching for the specified user.

It is assumed that user 1 has n paths succeeding in the multipath matching with delay of $\tau_{i_{A1},r_1}, \cdots, \tau_{i_{An},r_n}$ respectively, where $i_{A1}, \cdots, i_{An}$ respectively represent antenna index, $r_1, \cdots, r_n$ represent multipath index, and $n \in \{2,3,4\}$. It is necessary to use a relationship among the delay of the n paths to obtain a sampling position, and then search for a corresponding matrix. According to judgment criteria for the multipath matching shown in FIG. 2. there may be three cases for determination of the sampling position.

When n paths have same delay, i.e.,

$$\tau_{i_{A1},r_1} = \tau_{i_{A2},r_2} = ... = \tau_{i_{An},rn},$$

then $\tau_1 = \tau_{iA1,r1}$, and $\tau_1$ is brought into equation 1 for calculating the sampling position.

When a deviation of 1/8 chip exists between maximum delay and minimum delay of n paths, i.e.,

$$\max\left(\tau_{iA_j,r_j}\right) - \min\left(\tau_{iA_j,r_j}\right) = 1, \quad j \in [1,n],$$

then $\tau_1 = \min\left(\tau_{iAj,rj}\right)$, and $\tau_1$ is brought into equation 1 for calculating the sampling position.

When a deviation of 1/4 chip exists between the maximum delay and the minimum delay of n paths, i.e.,

$$\max\left(\tau_{iA_j,r_j}\right) - \min\left(\tau_{iA_j,r_j}\right) = 2, \quad j \in [1,n],$$

then $\tau_1 = \min\left(\tau_{iAj,rj}\right) + 1$, and $\tau_1$ is brought into equation 1 for calculating the sampling position.

After the sampling position of the n multipaths succeeding in the multipath matching is obtained, the autocorrelation inverse matrix at the sampling position may be selected from $R\_rake$ in combination with the antenna index.

For a multipath failing in the multipath matching for user 1, a corresponding element will be selected from the autocorrelation inverse matrix of the common signal according to multipath delay on the multipath and antenna index.

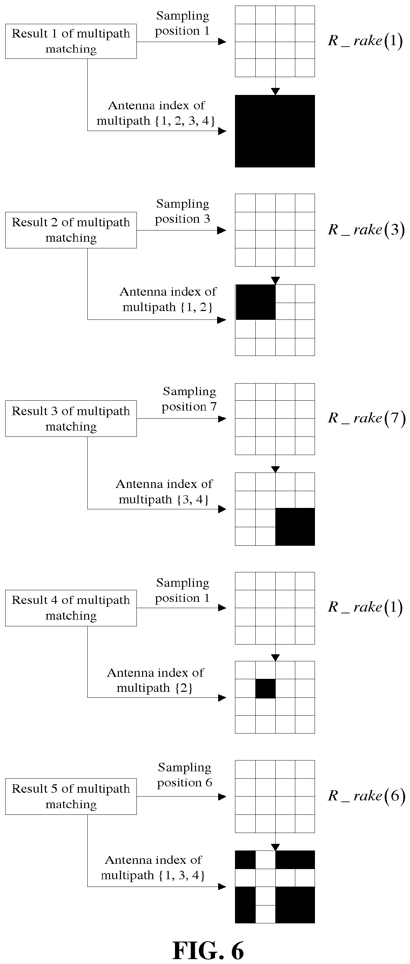

Still taking results of the multipath matching with 4 antennas in FIG. 3 as an example, for a case where 4 paths are successfully matched, the minimum multipath delay 1 is selected and brought it into equation 1 to obtain a sampling position 1, and then a matrix corresponding to the 4 paths is $R\_rake(1)$, as shown in result 1 of the multipath matching in FIG. 6. For a case of partial matching, for example, 3 paths on antennas 1, 3 and 4 are successfully matched, then minimum multipath delay 29 is selected and brought it into $\tau_1 = \min\left(\tau_{iAj,rj}\right) + 1$ to obtain $\tau_1$ of 30; the value of 30 is brought into equation 1 to get a sampling position of 6, so corresponding elements of antennas 1, 3 and 4 are selected from $R\_rake(6)$ to form a matrix corresponding to those 3 paths, i.e. black part of result 5 of the multipath matching shown in FIG. 6. For one or more multipaths failing in the multipath matching, the sampling position 1 is directly obtained according to the multipath delay, and then second element along the diagonal is selected from $R\_rake(1)$ as the autocorrelation matrix, as shown in matching result 4 of FIG. 6. A matrix obtained from the above results of the multipath matching of those 5 groups is the autocorrelation matrix of the signal for this user.

An autocorrelation matrix of a signal corresponding to other users may also be calculated by the same method and will not be repeated here.

In step 104, a combined weight for the specified user is calculated according to a channel estimation value of the specified user and the autocorrelation inverse matrix of the specified user signal.

In an example, before the combined weight for the specified user is calculated according to the channel estimation value of the specified user and the autocorrelation inverse matrix of the specified user signal, the method further includes a step described below.

Calculation of the channel estimation value of the specified user is performed according to a result of modulation and demodulation of a control channel.

In an example, the modulation and demodulation of the control channel includes a step described below.

The control channel is modulated and demodulated according to the uplink sampled antenna data and the multipath information.

In an example, the multipath information is determined in steps described below.

The multipath position of the specific user is searched for and determined; and the multipath information is obtained based on a result of the searching and determination.

In an example, when a RAKE user performs spatial IRC processing, calculation of the combined weight will be implemented according to the result of the multipath matching.

For two multipaths succeeding in the multipath matching, accurate channel estimation values of the two multipaths may be selected to form a 2*5 matrix:

$$RCE(r,l,b_C) = [c_{SF}(r,b_C) \quad c_{SF}(l,b_C)]^T,$$

where $RCE(r,l,b_C)$ represents an accurate channel estimation matrix; $c_{SF}(r,b_C)$ represents an accurate channel estimation value on a multipath $r$; $C_{SF}(l,b_C)$ represents an accurate channel estimation value on a multipath $l$; r represents a first multipath succeeding in the multipath matching; $l$ represents a second multipath succeeding in the multipath matching; $b_C$ is symbol index within a value range of 0 to N.

Since the autocorrelation inverse matrix of the signal is calculated in an order of antenna 1 and antenna 2, in order to facilitate calculation, the first row in the above equation is used for storing the accurate channel estimation value corresponding to the multipath on antenna 1 and the second row is used for storing the accurate channel estimation value corresponding to the multipath on antenna 2.

Combining the obtained autocorrelation matrix of the signal corresponding to the two multipaths, the calculation equation of the spatial IRC for these two multipaths is:

$$tmp\_RCE(r,l,b_c) = invR2(i_S) * RCE(r,l,b_c);$$

where $tmp\_RCE(r,l,b_c)$ represents a combined weight matrix of a multipath; $invR2(i_S)$ represents an autocorrelation matrix of the signal corresponding to this multipath.

For a multipath failing in the multipath matching, a corresponding channel estimation value is searched out first to form a 1*5 vector:

$$RCE(r,r,b_c) = c_{SF}(r,b_c).$$

Combining an obtained signal autocorrelation matrix corresponding to the multipath, the calculation equation of the spatial IRC for the multipath is:

$$tmp\_RCE(r,r,b_c) = invR1(i_S) * RCE(r,r,b_c);$$

where the $r$ in $RCE(r,r,b_c)$ represent a number of the multipath failing in the multipath matching.

It should be noted that, when N is relatively large, e.g., N>=3, the autocorrelation matrix has a dimension of N*N, which leads to relatively complex calculation for directly obtaining the inverse matrix, may refer to an ARAKE receiver method, a system of linear equations may be solved using a Gauss-Saidel iteration method to obtain the combined weight.

Assuming an autocorrelation matrix corresponding to these N multipaths is $tmp\_R_N$, the combined weight is:

$$tmp\_RCE_N(b_C) = tmp\_R_N^{-1} * RCE_N(b_C);$$

an initial iteration value is:

$$RICE_N(b_C,m,0) = 0,$$

the iteration process is:

$$RCE_N(b_C,m,k+1) =$$

$$\frac{RCE_N(b_C,m) - \sum_{p=1}^{m-1} tmp\_R_N(b_C,m,p) * RICE_N(b_C,p,k+1) - \sum_{p=m+1}^{n} tmp\_R_N(b_C,m,p) * RICE_N(b_C,p,k)}{tmp\_R_N(b_C,m,m)}$$

where $RICE_N(b_C,p,k)$ represents the combined weight, $k$ represents the number of iterations and has an initial value of 3, $m$ represents a multipath index.

In step 105, a data channel of the specified user is modulated and demodulated based on the combined weight for the specified user.

In an example, the step in which the data channel of the specified user is modulated and demodulated based on the combined weight for the specified user includes an operation described below.

According to the uplink sampling antenna data, the multipath information and the combined weight of the specific user, the data channel of the specified user is demodulated and modulated.

Further, the method further includes a step described below.

Data from modulation and demodulation of the data channel of the specified user is output to the BBU side.

In the technical solution of the embodiments of the disclosure, because of a large number of RAKE users corresponding to a same RRU, it is impossible to calculate the correlation matrix of interference and noise for each RAKE user and find its inverse, which will make the entire system to have high computational complexity and cannot be realized. All RAKE users corresponding to the same RRU share data of multiple antennas on the RRU, those data can be used for calculating an autocorrelation matrix of a receiving signal as an approximate estimate of the covariance matrix of interference and noise, and obtaining an autocorrelation inverse matrix. Then, according to multipath delay of each RAKE user, an autocorrelation inverse matrix of the signal of each user may be obtained through simple matrix operations, thus makes RAKE users to obtain IRC gain with a minimum calculation amount.

According to the method provided by the embodiments of the disclosure, the problem of extremely high computational complexity in the IRC processing of a RAKE receiver of the BBU side can be solved, the computational complexity can be greatly reduced, and meanwhile the demodulation performance of the uplink data channel can also be greatly improved.

Example 2

The interference suppression method of the present invention will be described in details below with reference to specific implementation scenarios.

Illustratively, processing accuracy of 1/8 chip and N antennas are taken as an example for detailed description.

If there are 8 samples on each chip, these 8 values should be considered for x, i.e., x=0, x=1/8, x=1/4, x=3/8, x=1/2, x=5/8, x=3/4 and x=7/8. Multipath delay of all RAKE users may be mapped into $[0 \quad \frac{1}{8}chip \quad ... \quad \frac{7}{8}chip]^T$, an autocorrelation matrix of an antenna diversity signal at each multipath delay position comes from $R(i_S)$, $i_S \in \{0, 1, ..., 7\}$. For a specific RAKE user, if a multipath has delay of $\tau$, then a mapping relationship:

$$i_S = \mathrm{mod}(\tau, 8) \qquad\qquad (\text{Equation 2})$$

where $i_S \in \{0, 1, ..., 7\}$ corresponds to sampling positions of $[0 \quad \frac{1}{8}chip \quad ... \quad \frac{7}{8}chip]^T$ on each chip.

Assuming $z_U(k,i_A)$ as all valid antenna data by 8-times sampling in a slot, where $k \in [0,2560*8-1]$ is a sample index of antenna data; $i_A \in \{1, 2, ..., N\}$ is an antenna index.

It is assumed that in this slot, data of N antennas with a sampling index of $k_U$ form a vector:

$$u(k_U) = [z_U(k_U,1) \quad z_U(k_U,2)]^T,$$

an autocorrelation matrix corresponding to this vector is:

$$R(k_U) = u(k_U)*u^H(k_U) = \begin{bmatrix} |z_U(k_U,1)|^2 & z_U(k_U,1)*z_U{}^*(k_U,2) \\ z_U{}^*(k_U,1)*z_U(k_U,2) & |z_U(k_U,2)|^2 \end{bmatrix}.$$

Here, $R\_rake_{tmp}(i_S)$ obtained from the calculation may represent not only the autocorrelation inverse matrix on N antennas, but also include results of signal autocorrelation calculation on the N antennas. Then, the calculation of the autocorrelation inverse matrix of the common signal needs to be processed separately according to the number of antennas.

It is assumed that in this slot, the autocorrelation matrix of the common signal at the specified sampling position is $A = \begin{bmatrix} a_{11} & a_{12} \\ a_{21} & a_{22} \end{bmatrix}.$ According to the above description, $a_{11}$ corresponds to an autocorrelation matrix of a signal on antenna 1, and $a_{22}$ corresponds to an autocorrelation matrix of a signal on antenna 2. For a case of only one antenna, an autocorrelation inverse matrix of the signal is calculated from a reciprocal of $a_{11}$ or $a_{22}$ according to an antenna index,

such as

$$A_{ant1}^{-1} = \frac{1}{a_{11}};$$

$$A_{ant2}^{-1} = \frac{1}{a_{22}}.$$

According to the antenna index, the autocorrelation inverse matrices on the two antennas at the sampling position are arranged according to antenna index to form a vector:

$$A_{1}^{-1} = \begin{bmatrix} A_{ant1}^{-1} & A_{ant2}^{-1} \end{bmatrix}.$$

The $A_1^{-1}$ obtained at different sampling positions in this slot are stored according to the sampling positions to obtain a Y*2 matrix, i.e, $invR1_{tmp}(i_S)$.

The autocorrelation inverse matrix of the signal on the two antennas is calculated using a following equation:

$$A^{-1} = \frac{1}{a_{11}*a_{22} - a_{12}*a_{21}} \begin{bmatrix} a_{22} & -a_{12} \\ -a_{21} & a_{11} \end{bmatrix}.$$

The $A_1^{-1}$ obtained at different sampling positions in this slot are stored according to the sampling positions to obtain a Y*2*2 matrix, i.e., $invR2_{tmp}(i_S)$.

Further, processing accuracy of 1/8 chip and 2 antennas are taken as an example for a detailed description below.

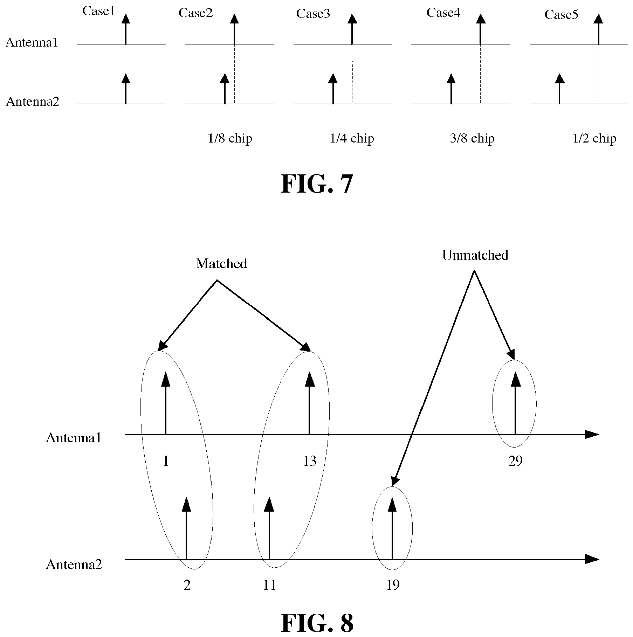

FIG. 7 shows a schematic diagram of a successful multipath matching with 2 antennas. In Case1 to Case3 of FIG. 7, the deviation of multipath delay between the 2 antennas is equal to or less than 1/4 chip; and in Case1 to Case5, the deviation of multipath delay between the 2 antennas is equal to or less than 1/2 chip. An example of a specific multipath matching process will be illustrated as follows.

Multi-paths on each of the two antennas are sorted according to a search result. $\tau_{i_A,r}$ represents multipath delay, where $i_A \in \{1,2\}$ is an antenna index, r is a multipath index. It is assumed that there are n paths and m paths on those 2 antennas respectively.

The delay of respective paths on antenna 1 is sorted to form a vector:

$$delay1 = \begin{bmatrix} \tau_{1,1} & \tau_{1,2} & \cdots & \tau_{1,n} \end{bmatrix};$$

the delay of respective paths on antenna 2 is sorted to form a vector:

$$delay2 = \begin{bmatrix} \tau_{2,1} & \tau_{2,2} & \cdots & \tau_{2,m} \end{bmatrix}.$$

The multipath matching using delay of 1/4 chip includes steps described below.

The delay of respective paths on antenna 1 is taken as reference. First, *delay2* is searched for a path which has an absolute value of a deviation from $\tau_{1,1}$ not exceeding 1/4 chip. If this path exists, then multipath matching succeeds and these two multipaths are recorded; otherwise, delay2 is search for a path which has an absolute value of a deviation from $\tau_{1,2}$ not exceeding 1/4 chip, and so on.

It should be noted that, each searching operation in *delay2* is performed for an unmatched multipath in sequence.

In a present system, two multipaths on a same antenna have a deviation no less than 3/4 chip. In order to perform a preferred selection of two multipaths with a smaller deviation in the multipath matching, the multipath matching according to the deviation of 1/2 chip may include two steps describe below.

In first step, whether there is a multipath with a deviation of 1/4 chip is determined. The delay of respective paths on antenna 1 is taken as reference. First, *delay*2 is searched for a multipath, which has an absolute value of a deviation from $\tau_{1,1}$ not exceeding 1/4 chip. If the multipath exists, multipath matching succeeds and these two multipaths are recorded; otherwise, *delay*2 is searched for a multipath which has an absolute value of a deviation from $\tau_{1,2}$ not exceeding 1/4 chip, and so on.

In second step, whether there is a multipath with a deviation of 1/2 chip is determined. This step is performed for unmatched multipaths after the first step. The delay of respective multipaths on antenna 1 is still taken as reference. It is assumed that after the first step delay of $\tau_{1,i}$ in *delay*1 fails in the matching, the unmatched multipaths in *delay*2 is searched for a multipath which has an absolute value of a deviation from $\tau_{1,i}$ not exceeding 1/2 chip. If the multipath exists, then multipath matching succeeds and these two multipaths are recorded; otherwise, the matching is perfomed on a next multipath in *delay*1.

It should be noted that, even after the matching is completed, there may still be one or more unmatched multipaths in *delay*1 and *delay*2.

FIG. 8 shows a schematic diagram of multipath matching with 2 antennas. In FIG. 8 delay=[2 11 19], a matching result includes two successfully matched multipaths and two unmatched multipaths.

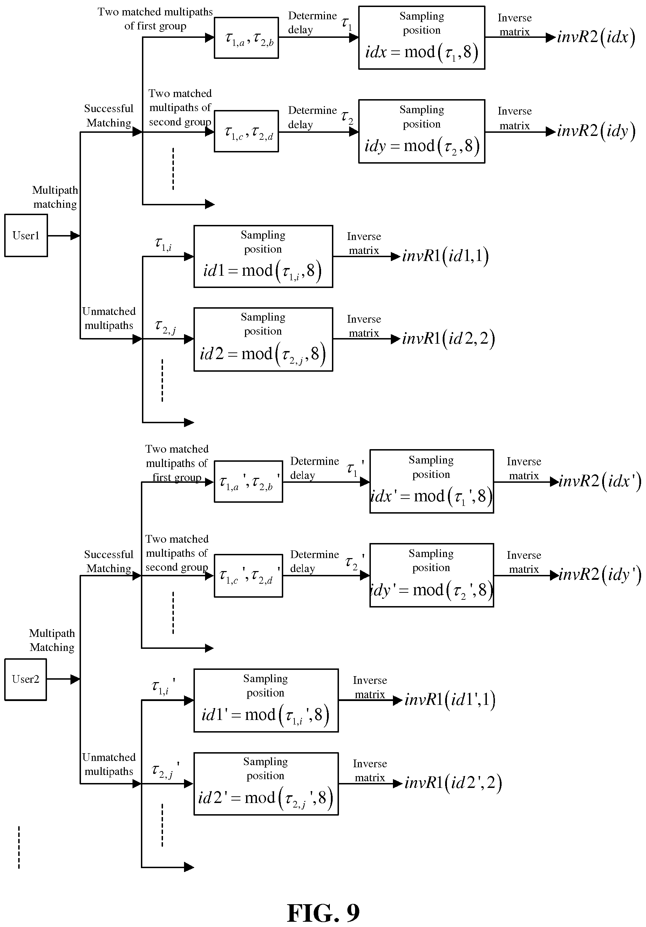

FIG. 9 is a flowchart of calculating an autocorrelation inverse matrix of a specific user. As shown in FIG. 9, it is assumed that user 1 has two successfully matched multipaths with delay of $\tau_{1,a}$ and $\tau_{2,b}$ respectively. A relationship between $\tau_{1,a}$ and $\tau_{2,b}$ is used for obtaining a sampling position, and a corresponding matrix is searched out. According to the judgment criteria of the multipath matching, there are five cases for determination of the sampling position.

When the two multipaths have same delay, i.e., $\tau_{1,a} = \tau_{2,b} = \tau_1$, the sampling position may be calculated according to equation 2 directly using $\tau_1$.

When the two multipaths have delay of 1/8 chip, i.e., $|\tau_{1,a} - \tau_{2,b}| = 1$, then $\tau_1 = \min(\tau_{1,a}, \tau_{2,b})$, $\tau_1$ is brought into equation 2 to calculate the sampling position.

When the two multipaths have delay of 1/4 chip, i.e., $|\tau_{1,a} - \tau_{2,b}| = 2$, then $\tau_1 = (\tau_{1,a} + \tau_{2,b})/2$, $\tau_1$ is brought into equation 2 to calculate the sampling position.

When the two multipaths have delay of 3/8 chip, i.e., $|\tau_{1,a} - \tau_{2,b}| = 3$, then $\tau_1 = \min(\tau_{1,a}, \tau_{2,b}) + 1$, $\tau_1$ is brought into equation 2 to calculate the sampling position.

When the two multipaths have delay of 1/2 chip, i.e., $|\tau_{1,a} - \tau_{2,b}| = 4$, then $\tau_1 = (\tau_{1,a} + \tau_{2,b})/2$, $\tau_1$ is brought into equation 2 to calculate the sampling position.

In easel to case 3, the deviation of delay between two multipaths is no more than 1/4.

After the sampling position of the successfully matched multipaths is obtained, an autocorrelation inverse matrix at the sampling position may be selected from $invR2(i_S)$.

For a multipath failing in the multipath matching for user 1, an autocorrelation inverse matrix of this multipath is searched out according to the antenna index respectively. It is assumed that a multipath failing in the multipath matching on antenna 1 has delay of $\tau_{1,i}$. $\tau_{1,i}$ is brought into equation 2 to obtain the sampling position, and $invR1(i_S)$ is searched for an element corresponding to the sampling position on antenna 1. It is assumed that a multipath failing in multipath matching on antenna 2 has delay of $\tau_{2,j}$. After the sampling position is obtained using the same method, $invR1(i_S)$ is searched for an element corresponding to the sampling position on antenna 2.

It can be seen that, compared with the algorithm for calculating and inverting the correlation matrix of interference and noise for respective users, calculation complexity of the entire system is reduced and the calculation amount of calculating and inverting the correlation matrix of interference and noise in IRC is also reduced to an acceptable range.

The technical solutions described in this example propose use of the calculation of the autocorrelation matrix for a same RRU antenna instead of respective users as an approximate estimation of the covariance matrix of interference and noise, which greatly reduces calculation complexity of the system. According to multipath delay of users, a simple algorithm may be applied, and the correlation matrix and its inverse matrix of a respective user is obtained by sharing the autocorrelation matrix and inverse matrix, so that a greater gain is guaranteed for each user.

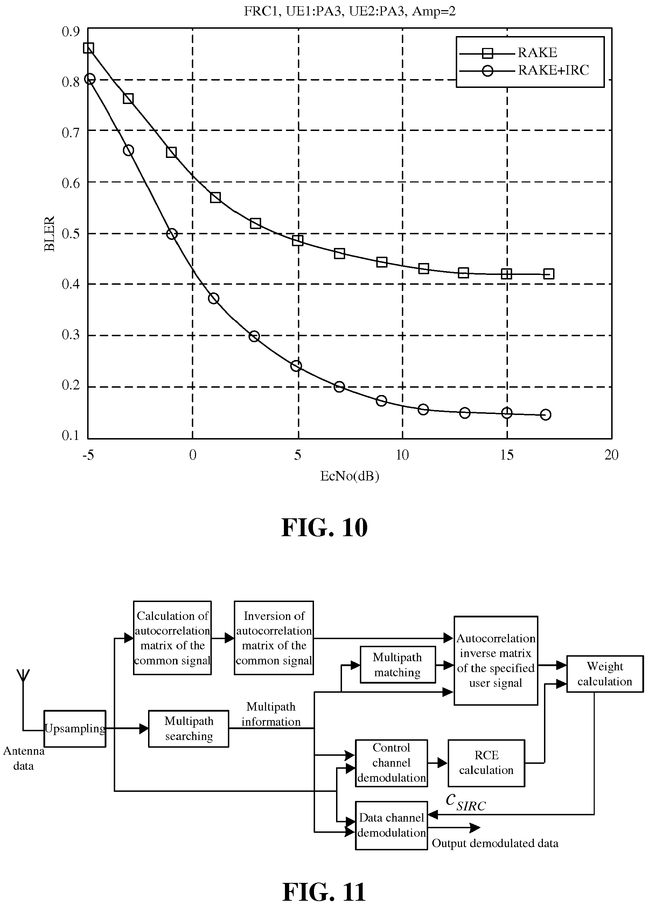

FIG. 10 is a simulated comparison diagram of RAKE and RAKE_IRC with a ratio of 6 dB of interference user to benefited user according to an embodiment of the present invention. It may be seen in FIG. 10, compared with the existing RAKE technology, the data demodulation gain gets larger. This significantly increases the data demodulation gain, enhances the signal-to-noise ratio, and achieves the purpose of increasing system capacity.

Example 3

FIG. 11 is a block diagram of RAKE IRC architecture according to an example. As shown in FIG. 11, the architecture diagram mainly includes an upsampling module A, a common signal autocorrelation matrix generation module B, a common signal autocorrelation matrix inversion module C, a multipath searching module D, a multipath matching calculation module F, a specified user signal autocorrelation inverse matrix generation module G, a specified user signal weight calculation module H, a control channel demodulation module M, a data channel demodulation module E, and a refined channel estimate (RCE) calculation module P.

The upsampling module A is responsible for interpolation calculation of antenna data to improve sampling accuracy.

The common signal autocorrelation matrix generation module B is responsible for generating an autocorrelation matrix of the common signal for each time slot in the cell (RRU).

The common signal autocorrelation matrix inversion module C is responsible for generating an autocorrelation inverse matrix of the common signal for each time slot in the cell (RRU).

The multipath searching module D is responsible for searching and determining a multipath position of a user.

The multipath matching calculation module F is responsible for determination and calculation of matching multiple multipaths of the specific user according to a result of multipath search.

The specified user autocorrelation inverse matrix generation module G is responsible for obtaining the autocorrelation inverse matrix of the specific user according to a determination result of multipath matching for the specific user and the autocorrelation inverse matrix of the common signal.

The specific user signal weight calculation module H is responsible for calculating the weight of the specific user signal.

The control channel demodulation module M is responsible for demodulation and modulation of the control channel.

The data channel demodulation module E is responsible for demodulation and modulation of the data channel.

The RCE calculation module P is responsible for calculating channel estimation according to a result of the control channel demodulation and modulation.

The modules A, C, D, M, E and P may be implemented in the existing art.

Those skilled in the art should understand that, the functions of the modules in the architectural diagram of the example can be understood with reference to the relevant description of the interference suppression method described above, and will not be repeated here.

These examples of the disclosure provide a RAKE IRC demodulation solution, which can effectively upgrade original solution of pure RAKE demodulation. The RAKE IRC demodulation solution may be implemented through addition of only a new calculation module to the original architecture, and has good compatibility.

Embodiment 4

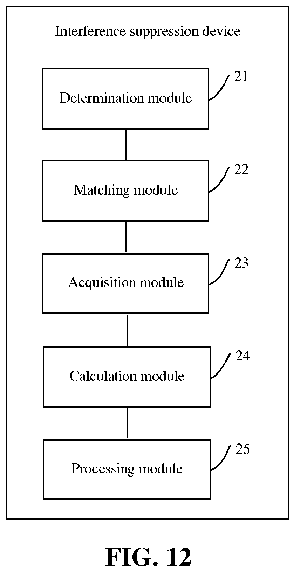

The embodiments of the present invention provide an interference suppression device. FIG. 12 shows a block diagram of an interference suppression device. The interference suppression device includes a determination module 21, a matching module 22, an acquisition module 23, a calculation module 24 and a processing module 25.

The determination module 21 is configured to determine an autocorrelation inverse matrix of a cell common signal according to uplink sampling antenna data.

The matching module 22 is configured to perform multipath matching for a specified user according to the uplink sampling antenna data.

The acquisition module 23 is configured to acquire an autocorrelation inverse matrix of a specified user signal from the autocorrelation inverse matrix of the cell common signal according to a result of the multipath matching for the specified user and multipath information.

The calculation module 24 is configured to calculate a combined weight for the specified user according to a channel estimation value of the specified user and the autocorrelation inverse matrix of the specified user signal.

The processing module 25 is configured to modulate and demodulate a data channel of the specified user based on the combined weight for the specified user.

In an optional embodiment, the determination module 21 is further configured to:

calculate an autocorrelation matrix of the cell common signal according to the uplink sampling antenna data; and

obtain the autocorrelation inverse matrix of the cell common signal according to the autocorrelation matrix of the cell common signal.

In an optional embodiment, the matching module 22 is further configured to:

perform multipath matching for the specified user according to the uplink sampling antenna data before the determination module 21 calculates the autocorrelation matrix of the cell common signal according to the uplink sampling antenna data;
perform multipath matching for the specified user according to the uplink sampling antenna data after the determination module 21 obtains the autocorrelation inverse matrix of the cell common signal according to the autocorrelation matrix of the cell common signal; or

perform multipath matching for the specified user according to the uplink sampling antenna data after the determination module 21 calculates the autocorrelation matrix of the cell common signal according to the uplink sampling antenna data and before the determination module 21 obtains the autocorrelation inverse matrix of the cell common signal according to the autocorrelation matrix of the cell common signal.

In an optional embodiment, the determination module 21 is further configured to:
calculate the autocorrelation matrix of the cell common signal according to a sampling position index and a chip index.
In an optional embodiment, the matching module 22 is further configured to:

search for one or more multipaths with same delay on multiple antennas of the specified user in the cell;
store multipaths with the same delay in a same structure, each multipath information being only stored in one structure.

According to the invention, the acquisition module 23 is further configured to:

calculate a sampling position according to the result of the multipath matching for the specified user and the multipath information; and
select the autocorrelation inverse matrix of the specified user signal at the sampling position from the autocorrelation inverse matrix of the cell common signal according to the sampling position and in combination with an antenna index.

In an optional embodiment, the acquisition module 23 is further configured to:

for more than one multipath succeeding in the multipath matching for the specified user, obtain the sampling position according to a delay relationship among the more than one multipath succeeding in the multipath matching for the specified user; or

for a multipath failing in the multipath matching for the specified user, obtain the sampling position according to multipath delay on the multipath failing in the multipath matching for the specified user.

Those skilled in the art should understand that, functions of various processing units in the interference suppression device according to the embodiments of the present invention may be understood with reference to the above description of the interference suppression method. Each processing unit in the interference suppression device according to the embodiments of the present invention can be realized by an analog circuit for implementation of the functions described in the embodiments of the present invention, or by software performing the functions described in the embodiments of the present invention on an intelligent terminal.
In this embodiment, the determination module 21, the matching module 22, the acquisition module 23, the calculation module 24 and the processing module 25 included in the interference suppression device may be implemented by a central processing unit (CPU), a digital signal processor (DSP), a programmable gate array (FPGA), etc. in the interference suppression device or the terminal to which the interference suppression device belongs in practical applications.
The interference suppression device according to the embodiments of the disclosure can solve the problem of the extremely high computational complexity in the IRC processing of a RAKE receiver on the BBU side, so that the computational complexity can be greatly reduced, and the demodulation performance of the uplink data channel can be greatly improved.
The embodiments of the disclosure also disclose a computer storage medium. The computer storage medium stores one or more programs, which may be executed by one or more processors to implement steps described below.
An autocorrelation inverse matrix of a cell common signal is determined according to uplink sampling antenna data;

multipath matching is performed according to the uplink sampling antenna data;

an autocorrelation inverse matrix of a specified user signal is acquired from the autocorrelation inverse matrix of the cell common signal according to a result of the multipath matching for the specified user and multipath information;

a combined weight for the specified user is calculated according to a channel estimation value of the specified user and the autocorrelation inverse matrix of the specified user signal; and

a data channel of the specified user is modulated and demodulated based on the combined weight for the specified user.

As an embodiment, when the step in which according to uplink sampling antenna data, an autocorrelation inverse matrix of a cell common signal is determined is implemented, the one or more programs may further be executed by one or more processors to implement following steps:

an autocorrelation matrix of the cell common signal is calculated according to the uplink sampling antenna data; and

the autocorrelation inverse matrix of the cell common signal is obtained according to the autocorrelation matrix of the cell common signal.

As an embodiment, when the step in which the multipath matching is performed according to the uplink sampling antenna data is implemented, the one or more programs may further be executed by one or more processors to implement following steps:

the multipath matching is performed before the autocorrelation matrix of the cell common signal is calculated according to the uplink sampling antenna data;

the multipath matching is performed after the autocorrelation inverse matrix of the cell common signal is obtained according to the autocorrelation matrix of the cell common signal; or

the multipath matching is performed after the autocorrelation matrix of the cell common signal is calculated according to the uplink sampling antenna data, and before the autocorrelation inverse matrix of the cell common signal is obtained according to the autocorrelation matrix of the cell common signal.

As an embodiment, when the step in which the multipath matching is performed according to the uplink sampling antenna data is implemented, the one or more programs may further be executed by one or more processors to implement following steps:
the autocorrelation matrix of the cell common signal is calculated according to a sampling position index and a chip index.
As an embodiment, when the step of multipath matching is performed according to the uplink sampling antenna data is implemented, the one or more programs may further be executed by one or more processors to implement following steps:

one or more multipaths with same delay are searched for on multiple antennas of the specified user in the cell; and
the multipaths with the same delay are stored in a same structure, wherein each multipath information is stored in one structure.

According to the invention, when the step in which the autocorrelation inverse matrix of the specified user signal is acquired from the autocorrelation inverse matrix of the cell common signal according to a result of the multipath matching for the specified user and multipath information, the one or more programs may further be executed by one or more processors to implement following steps:

a sampling position is calculated according to the result of the multipath matching for the specified user and the multipath information; and
the autocorrelation inverse matrix of the specified user signal is selected at the sampling position from the autocorrelation inverse matrix of the cell common signal according to the sampling position and in combination with an antenna index.

Those skilled in the art should understand that, the functions of programs in the computer storage medium of this embodiment may be understood with reference to the relevant descriptions of the interference suppression method described in the previous embodiments.
It may be understood that the devices and the methods disclosed in the embodiments of the present invention may be implemented in other manners. The device embodiments described above are merely illustrative. For example, unit division is merely a logical function division, and, in practice, the unit division may be implemented in other ways. For example, multiple units or components may be combined or may be integrated into another system, or some features may be omitted or not executed. In addition, coupling, direct coupling, or communication connections between the presented or discussed different components may be indirect coupling or communication connections, via interfaces, between devices or units, and may be electrical, mechanical or in other forms.
The units described above as separate components may or may not be physically separated. Components presented as units may or may not be physical units, that is, may be located in one place or may be distributed over multiple network units. Part or all of these units may be selected according to practical requirements to achieve objects of the solutions in the embodiments of the present invention.

Moreover, various function units in each of the multiple embodiments of the present invention may all be integrated in one second processing unit, or each unit may be used as a separate unit, or two or more units may be integrated into one unit. The integrated function unit may be implemented by hardware or may be implemented by hardware plus a software function unit.

**INDUSTRIAL APPLICABILITY**

In the solutions of the embodiments of the present invention, an autocorrelation inverse matrix of a cell common signal is determined according to uplink sampling antenna data; multipath matching is performed according to the uplink sampling antenna data; an autocorrelation inverse matrix of a specified user signal is acquired from the autocorrelation inverse matrix of the cell common signal according to a result of the multipath matching for the specified user and multipath information; a combined weight for the specified user is calculated according to a channel estimation value of the specified user and the autocorrelation inverse matrix of the specified user signal; and a data channel of the specified user is modulated and demodulated based on the combined weight for the specified user. In this way, the problem of high computational complexity in the IRC processing of a RAKE receiver on the BBU side can be solved, so that the computational complexity can be greatly reduced and the demodulation performance of the uplink data channel can be greatly improved.

**Claims**

1. An interference suppression method, comprising:

   determining an autocorrelation inverse matrix of a cell common signal according to uplink sampling antenna data (101);
   performing multipath matching for a specified user according to the uplink sampling antenna data (102);
   acquiring an autocorrelation inverse matrix of a specified user signal from the autocorrelation inverse matrix of the cell common signal according to a result of the multipath matching for the specified user and multipath information (103);
   calculating a combined weight for the specified user according to a channel estimation value of the specified user and the autocorrelation inverse matrix of the specified user signal; and
   modulating and demodulating a data channel of the specified user based on the combined weight for the specified user (104);

   wherein acquiring the autocorrelation inverse matrix of the specified user signal from the autocorrelation inverse matrix of the cell common signal according to the result of the multipath matching for the specified user and the multipath information comprises:

   calculating a sampling position according to the result of the multipath matching for the specified user and the multipath information; and
   selecting the autocorrelation inverse matrix of the specified user signal at the sampling position from the auto-correlation inverse matrix of the cell common signal according to the sampling position and in combination with an antenna index.

2. The interference suppression method according to claim 1, wherein determining the autocorrelation inverse matrix of the cell common signal according to the uplink sampling antenna data comprises:

   calculating an autocorrelation matrix of the cell common signal according to the uplink sampling antenna data (101a); and
   obtaining the autocorrelation inverse matrix of the cell common signal according to the autocorrelation matrix of the cell common signal (101b).

3. The interference suppression method according to claim 2, wherein the step of performing multipath matching for the specified user according to the uplink sampling antenna data is implemented:

   before calculating the autocorrelation matrix of the cell common signal according to the uplink sampling antenna data;
after obtaining the autocorrelation inverse matrix of the cell common signal according to the autocorrelation matrix of the cell common signal; or
after calculating the autocorrelation matrix of the cell common signal according to the uplink sampling antenna data, and before obtaining the autocorrelation inverse matrix of the cell common signal according to the auto-correlation matrix of the cell common signal.

4. The interference suppression method according to claim 2, wherein determining the autocorrelation matrix of the cell common signal according to uplink sampling antenna data comprises:
calculating the autocorrelation matrix of the cell common signal according to a sampling position index and a chip index.

5. The interference suppression method according to claim 1, wherein performing multipath matching for the specified user according to the uplink sampling antenna data comprises:

searching for one or more multipaths with same delay on multiple antennas of the specified user in the cell; and
storing the multipaths with the same delay in a same structure, wherein each multipath information is stored in one structure.

6. The interference suppression method according to claim 1, wherein calculating the sampling position according to the result of the multipath matching for the specified user and the multipath information comprises:

for more than one multipath succeeding in the multipath matching for the specified user, obtaining the sampling position according to a delay relationship among the more than one multipath succeeding in the multipath matching for the specified user; or
for a multipath failing in the multipath matching for the specified user, obtaining the sampling position according to multipath delay on the multipath failing in the multipath matching for the specified user.

7. An interference suppression device, comprising:

a determination module (21), which is configured to determine an autocorrelation inverse matrix of a cell common signal according to uplink sampling antenna data;
a matching module (22), which is configured to perform multipath matching for a specified user according to the uplink sampling antenna data;
an acquisition module (23), which is configured to acquire an autocorrelation inverse matrix of a specified user signal from the autocorrelation inverse matrix of the cell common signal according to a result of the multipath matching for the specified user and multipath information;
a calculation module (24), which is configured to calculate a combined weight for the specified user according to a channel estimation value of the specified user and the autocorrelation inverse matrix of the specified user signal; and
a processing module (25), which is configured to modulate and demodulate a data channel of the specified user based on the combined weight for the specified user;

wherein the acquisition module (23) is further configured to

calculate a sampling position according to the result of the multipath matching for the specified user and the multipath information;
select the autocorrelation inverse matrix of the specified user signal at the sampling position from the autocorrelation inverse matrix of the cell common signal according to the sampling position and in combination with an antenna index.

8. The interference suppression device according to claim 7, wherein the determination module (21) is further configured to:

calculate an autocorrelation matrix of the cell common signal according to the uplink sampling antenna data; and
obtain the autocorrelation inverse matrix of the cell common signal according to the autocorrelation matrix of the cell common signal.

9. The interference suppression device according to claim 8, wherein the matching module (22) is configured to:

perform multipath matching for the specified user according to the uplink sampling antenna data before the determination module (21) calculates the autocorrelation matrix of the cell common signal according to the uplink sampling antenna data;
perform multipath matching for the specified user according to the uplink sampling antenna data after the determination module (21) obtains the autocorrelation inverse matrix of the cell common signal according to the autocorrelation matrix of the cell common signal; or
perform multipath matching for the specified user according to the uplink sampling antenna data after the determination module (21) calculates the autocorrelation matrix of the cell common signal according to the uplink sampling antenna data and before the determination module (21) obtains the autocorrelation inverse matrix of the cell common signal according to the autocorrelation matrix of the cell common signal.

10. The interference suppression device according to claim 8, wherein the determination module (21) is further configured to:
calculate the autocorrelation matrix of the cell common signal according to a sampling position index and a chip index.

11. The interference suppression device according to claim 7, wherein the matching module (22) is further configured to:

search for one or more multipaths with same delay on multiple antennas of the specified user in the cell;
store the multipaths with the same delay in a same structure, wherein each multipath information is only stored in one structure.

12. The interference suppression device according to claim 7, wherein the acquisition module (23) is further configured to:

for more than one multipath succeeding in the multipath matching for the specified user, obtain the sampling position according to a delay relationship among the more than one multipath succeeding in the multipath matching for the specified user; or
for a multipath failing in the multipath matching for the specified user, obtain the sampling position according to multipath delay on the multipath failing in the multipath matching for the specified user.

13. A computer storage medium, wherein the computer storage medium stores computer-executable instructions which, when executed by a computer, cause the computer to carry out the interference suppression method according to any one of the claims 1 to 6.

**Patentansprüche**

1. Interferenzunterdrückungsverfahren, Folgendes umfassend:

Bestimmen einer inversen Autokorrelationsmatrix eines gemeinsamen Zellensignals gemäß den Daten einer Uplink-Abtastantenne (101);
Durchführen eines Mehrwegabgleichs für einen angegebenen Benutzer gemäß den Daten der Uplink-Abtastantenne (102);
Erfassen einer inversen Autokorrelationsmatrix eines angegebenen Benutzersignals aus der inversen Autokorrelationsmatrix des gemeinsamen Zellensignals gemäß einem Ergebnis des Mehrwegabgleichs für den angegebenen Benutzer und Mehrweginformationen (103);
Berechnen einer kombinierten Gewichtung für den angegebenen Benutzer gemäß einem Kanalschätzungswert des angegebenen Benutzers und der inversen Autokorrelationsmatrix des angegebenen Benutzersignals; und
Modulieren und Demodulieren eines Datenkanals des angegebenen Benutzers basierend auf der kombinierten Gewichtung für den angegebenen Benutzer (104);
wobei das Erfassen der inversen Autokorrelationsmatrix des angegebenen Benutzersignals aus der inversen Autokorrelationsmatrix des gemeinsamen Zellensignals gemäß dem Ergebnis des Mehrwegabgleichs für den angegebenen Benutzer und den Mehrweginformationen Folgendes umfasst:

Berechnen einer Abtastposition gemäß dem Ergebnis des Mehrwegabgleichs für den angegebenen Benutzer und den Mehrweginformationen; und
Auswählen der inversen Autokorrelationsmatrix des angegebenen Benutzersignals an der Abtastposition aus der inversen Autokorrelationsmatrix des gemeinsamen Zellensignals gemäß der Abtastposition und in Kombination mit einem Antennenindex.

2. Interferenzunterdrückungsverfahren nach Anspruch 1, wobei das Bestimmen der inversen Autokorrelationsmatrix des gemeinsamen Zellensignals gemäß den Daten der Uplink-Abtastantenne Folgendes umfasst:

Berechnen einer Autokorrelationsmatrix des gemeinsamen Zellensignals gemäß den Daten der Uplink-Abtastantenne (101a); und
Erhalten der inversen Autokorrelationsmatrix des gemeinsamen Zellensignals gemäß der Autokorrelationsmatrix des gemeinsamen Zellensignals (101b).

3. Interferenzunterdrückungsverfahren nach Anspruch 2, wobei der Schritt des Durchführens eines Mehrwegabgleichs für den angegebenen Benutzer gemäß den Daten der Uplink-Abtastantenne implementiert wird:

vor Berechnen der Autokorrelationsmatrix des gemeinsamen Zellensignals gemäß den Daten der Uplink-Abtastantenne;
nach Erhalten der inversen Autokorrelationsmatrix des gemeinsamen Zellensignals gemäß der Autokorrelationsmatrix des gemeinsamen Zellensignals; oder
nach Berechnen der Autokorrelationsmatrix des gemeinsamen Zellensignals gemäß den Daten der Uplink-Abtastantenne und vor Erhalten der inversen Autokorrelationsmatrix des gemeinsamen Zellensignals gemäß der Autokorrelationsmatrix des gemeinsamen Zellensignals.

4. Interferenzunterdrückungsverfahren nach Anspruch 2, wobei das Bestimmen der Autokorrelationsmatrix des gemeinsamen Zellensignals gemäß den Daten der Uplink-Abtastantenne Folgendes umfasst:
Berechnen der Autokorrelationsmatrix des gemeinsamen Zellensignals gemäß einem Abtastpositionsindex und einem Chipindex.

5. Interferenzunterdrückungsverfahren nach Anspruch 1, wobei das Durchführen des Mehrwegabgleichs für den angegebenen Benutzer gemäß den Daten der Uplink-Abtastantenne Folgendes umfasst:

Suchen nach einem oder mehreren Mehrwegen mit gleicher Verzögerung an mehreren Antennen des angegebenen Benutzers in der Zelle; und
Speichern der Mehrwege mit der gleichen Verzögerung in einer gleichen Struktur, wobei jede Mehrweginformation in einer Struktur gespeichert wird.

6. Interferenzunterdrückungsverfahren nach Anspruch 1, wobei das Berechnen der Abtastposition gemäß dem Ergebnis des Mehrwegabgleichs für den angegebenen Benutzer und den Mehrweginformationen Folgendes umfasst:

für mehr als einen Mehrweg, der im Mehrwegabgleich für den angegebenen Benutzer erfolgreich ist, Erhalten der Abtastposition gemäß einer Verzögerungsbeziehung bei dem mehr als einen Mehrweg, der im Mehrwegabgleich für den angegebenen Benutzer erfolgreich ist; oder
für einen Mehrweg, der im Mehrwegabgleich für den angegebenen Benutzer fehlschlägt, Erhalten der Abtastposition gemäß der Mehrwegverzögerung an dem Mehrweg, der im Mehrwegabgleich für den angegebenen Benutzer fehlschlägt.

7. Interferenzunterdrückungsvorrichtung, Folgendes umfassend:

ein Bestimmungsmodul (21), das konfiguriert ist, um eine inverse Autokorrelationsmatrix eines gemeinsamen Zellensignals gemäß Daten einer Uplink-Abtastantenne zu bestimmen;
ein Abgleichmodul (22), das konfiguriert ist, einen Mehrwegabgleich für einen angegebenen Benutzer gemäß den Daten der Uplink-Abtastantenne durchzuführen;
ein Erfassungsmodul (23), das konfiguriert ist, eine inverse Autokorrelationsmatrix eines angegebenen Benutzersignals aus der inversen Autokorrelationsmatrix des gemeinsamen Zellensignals gemäß einem Ergebnis des Mehrwegabgleichs für den angegebenen Benutzer und Mehrweginformationen zu erfassen;
ein Berechnungsmodul (24), das konfiguriert ist, eine kombinierte Gewichtung für den angegebenen Benutzer gemäß einem Kanalschätzungswert des angegebenen Benutzers und der inversen Autokorrelationsmatrix des angegebenen Benutzersignals zu berechnen; und
ein Verarbeitungsmodul (25), das konfiguriert ist, einen Datenkanal des angegebenen Benutzers basierend auf der kombinierten Gewichtung für den angegebenen Benutzer zu modulieren und zu demodulieren;
wobei das Erfassungsmodul (23) ferner konfiguriert ist, um:

eine Abtastposition gemäß dem Ergebnis des Mehrwegabgleichs für den angegebenen Benutzer und den Mehrweginformationen zu berechnen;
die inverse Autokorrelationsmatrix des angegebenen Benutzersignals an der Abtastposition aus der inversen Autokorrelationsmatrix des gemeinsamen Zellensignals gemäß der Abtastposition und in Kombination mit einem Antennenindex auszuwählen.

8. Interferenzunterdrückungsvorrichtung nach Anspruch 7, wobei das Bestimmungsmodul (21) ferner zu Folgendem konfiguriert ist:

Berechnen einer Autokorrelationsmatrix des gemeinsamen Zellensignals gemäß den Daten der Uplink-Abtastantenne; und
Erhalten der inversen Autokorrelationsmatrix des gemeinsamen Zellensignals gemäß der Autokorrelationsmatrix des gemeinsamen Zellensignals.

9. Interferenzunterdrückungsvorrichtung nach Anspruch 8, wobei das Abgleichmodul (22) zu Folgendem konfiguriert ist:

Durchführen eines Mehrwegabgleichs für den angegebenen Benutzer gemäß den Daten der Uplink-Abtastantenne, bevor das Bestimmungsmodul (21) die Autokorrelationsmatrix des gemeinsamen Zellensignals gemäß den Daten der Uplink-Abtastantenne berechnet;
Durchführen eines Mehrwegabgleichs für den angegebenen Benutzer gemäß den Daten der Uplink-Abtastantenne, nachdem das Bestimmungsmodul (21) die inverse Autokorrelationsmatrix des gemeinsamen Zellensignals gemäß der Autokorrelationsmatrix des gemeinsamen Zellensignals erhalten hat; oder
Durchführen eines Mehrwegabgleichs für den angegebenen Benutzer gemäß den Daten der Uplink-Abtastantenne, nachdem das Bestimmungsmodul (21) die Autokorrelationsmatrix des gemeinsamen Zellensignals gemäß den Daten der Uplink-Abtastantenne berechnet hat und bevor das Bestimmungsmodul (21) die inverse Autokorrelationsmatrix des gemeinsamen Zellensignals gemäß der Autokorrelationsmatrix des gemeinsamen Zellensignals erhält.

10. Interferenzunterdrückungsvorrichtung nach Anspruch 8, wobei das Bestimmungsmodul (21) ferner zu Folgendem konfiguriert ist:
Berechnen der Autokorrelationsmatrix des gemeinsamen Zellensignals gemäß einem Abtastpositionsindex und einem Chipindex.

11. Interferenzunterdrückungsvorrichtung nach Anspruch 7, wobei das Abgleichmodul (22) ferner zu Folgendem konfiguriert ist:

Suchen nach einem oder mehreren Mehrwegen mit gleicher Verzögerung an mehreren Antennen des angegebenen Benutzers in der Zelle;
Speichern der Mehrwege mit der gleichen Verzögerung in einer gleichen Struktur, wobei jede Mehrweginformation nur in einer Struktur gespeichert ist.

12. Interferenzunterdrückungsvorrichtung nach Anspruch 7, wobei das Erfassungsmodul (23) ferner zu Folgendem konfiguriert ist:

für mehr als einen Mehrweg, der im Mehrwegabgleich für den angegebenen Benutzer erfolgreich ist, Erhalten der Abtastposition gemäß einer Verzögerungsbeziehung bei dem mehr als einen Mehrweg, der im Mehrwegabgleich für den angegebenen Benutzer erfolgreich ist; oder
für einen Mehrweg, der im Mehrwegabgleich für den angegebenen Benutzer fehlschlägt, Erhalten der Abtastposition gemäß der Mehrwegverzögerung an dem Mehrweg, der im Mehrwegabgleich für den angegebenen Benutzer fehlschlägt.

13. Computerspeichermedium, wobei das Computerspeichermedium computerausführbare Anweisungen speichert, die, wenn sie von einem Computer ausgeführt werden, den Computer veranlassen, das Interferenzunterdrückungsverfahren nach einem der Ansprüche 1 bis 6 auszuführen.

**Revendications**

1. Procédé de suppression de brouillage comprenant :

la détermination d'une matrice inverse d'autocorrélation d'un signal commun de cellule selon des données d'antenne d'échantillonnage de liaison montante (101) ;
la réalisation de la mise en correspondance de trajets multiples pour un utilisateur spécifié selon les données d'antenne d'échantillonnage de liaison montante (102) ;
l'acquisition d'une matrice inverse d'autocorrélation d'un signal d'utilisateur spécifié de la matrice inverse d'autocorrélation du signal commun de cellule selon un résultat de la mise en correspondance de trajets multiples pour l'utilisateur spécifié et l'information de trajets multiples (103) ;
le calcul d'un poids combiné pour l'utilisateur spécifié selon une valeur d'estimation de canal de l'utilisateur spécifié et la matrice inverse d'autocorrélation du signal d'utilisateur spécifié ; et
la modulation et la démodulation d'un canal de données de l'utilisateur spécifié sur la base du poids combiné pour l'utilisateur spécifié (104) ;
dans lequel l'acquisition de la matrice inverse d'autocorrélation du signal d'utilisateur spécifié de la matrice inverse d'autocorrélation du signal commun de cellule selon le résultat de la mise en correspondance de trajets multiples pour l'utilisateur spécifié et l'information de trajets multiples comprend :

le calcul d'une position d'échantillonnage selon le résultat de la mise en correspondance de trajets multiples pour l'utilisateur spécifié et l'information de trajets multiples ; et
la sélection de la matrice inverse d'autocorrélation du signal d'utilisateur spécifié dans la position d'échantillonnage depuis la matrice inverse d'autocorrélation du signal commun de cellule selon la position d'échantillonnage et en combinaison avec un indice d'antenne.

2. Procédé de suppression de brouillage selon la revendication 1, dans lequel la détermination de la matrice inverse d'autocorrélation du signal commun de cellule selon les données d'antenne d'échantillonnage de liaison montante comprend :

le calcul d'une matrice d'autocorrélation du signal commun de cellule selon les données d'antenne d'échantillonnage de liaison montante (101a) ; et
l'obtention de la matrice inverse d'autocorrélation du signal commun de cellule selon la matrice d'autocorrélation du signal commun de cellule (101b).

3. Procédé de suppression de brouillage selon la revendication 2, dans lequel l'étape de réalisation de la mise en correspondance de trajets multiples pour l'utilisateur spécifié selon les données d'antenne d'échantillonnage de liaison montante est mise en œuvre :

avant le calcul de la matrice d'autocorrélation du signal commun de cellule selon les données d'antenne d'échantillonnage de liaison montante ;
après l'obtention de la matrice inverse d'autocorrélation du signal commun de cellule selon la matrice d'autocorrélation du signal commun de cellule ; ou
après le calcul de la matrice d'autocorrélation du signal commun de cellule selon les données d'antenne d'échantillonnage de liaison montante, et avant l'obtention de la matrice inverse d'autocorrélation du signal commun de cellule selon la matrice d'autocorrélation du signal commun de cellule.

4. Procédé de suppression de brouillage selon la revendication 2, dans lequel la détermination de la matrice d'autocorrélation du signal commun de cellule selon les données d'antenne d'échantillonnage de liaison montante comprend :
le calcul de la matrice d'autocorrélation du signal commun de cellule selon un indice de position d'échantillonnage et un indice de puce.

5. Procédé de suppression de brouillage selon la revendication 1, dans lequel la réalisation de la mise en correspondance de trajets multiples pour l'utilisateur spécifié selon les données d'antenne d'échantillonnage de liaison montante comprend :

la recherche d'un ou plusieurs trajets multiples avec le même délai sur de multiples antennes de l'utilisateur spécifié dans la cellule ; et

le stockage des trajets multiples avec le même délai dans une même structure, dans lequel chaque information de trajets multiples est stockée dans une structure.

6. Procédé de suppression de brouillage selon la revendication 1, dans lequel le calcul de la position d'échantillonnage selon le résultat de la mise en correspondance de trajets multiples pour l'utilisateur spécifié et l'information de trajets multiples comprend :

pour plus d'un trajet multiple réussissant dans la mise en correspondance de trajets multiples pour l'utilisateur spécifié, l'obtention de la position d'échantillonnage selon un rapport de délai parmi le plus d'un trajet multiple réussissant dans la mise en correspondance de trajets multiples pour l'utilisateur spécifié ; ou
pour un trajet multiple échouant dans la mise en correspondance de trajets multiples pour l'utilisateur spécifié, l'obtention de la position d'échantillonnage selon le délai de trajets multiples sur le trajet multiple échouant dans la mise en correspondance de trajets multiples pour l'utilisateur spécifié.

7. Dispositif de suppression de brouillage comprenant :

un module de détermination (21) qui est configuré pour déterminer une matrice inverse d'autocorrélation d'un signal commun de cellule selon les données d'antenne d'échantillonnage de liaison montante ;
un module de mise en correspondance (22) qui est configuré pour réaliser une mise en correspondance de trajets multiples pour un utilisateur spécifié selon les données d'antennes d'échantillonnage de liaison montante ;
un module d'acquisition (23) qui est configuré pour acquérir une matrice inverse d'autocorrélation d'un signal d'utilisateur spécifié de la matrice inverse d'autocorrélation du signal commun de cellule selon un résultat de la mise en correspondance de trajets multiples pour l'utilisateur spécifié et l'information de trajets multiples ;
un module de calcul (24) qui est configuré pour calculer un poids combiné pour l'utilisateur spécifié selon une valeur d'estimation de canal de l'utilisateur spécifié et la matrice inverse d'autocorrélation du signal utilisateur spécifié ; et
un module de traitement (25) qui est configuré pour moduler et démoduler un canal de données de l'utilisateur spécifié sur la base du poids combiné pour l'utilisateur spécifié ;
dans lequel le module d'acquisition (23) est en outre configuré pour
calculer une position d'échantillonnage selon le résultat de la mise en correspondance de trajets multiples pour l'utilisateur spécifié et l'information de trajets multiples ;
sélectionner la matrice inverse d'autocorrélation du signal d'utilisateur spécifié dans la position d'échantillonnage à partir de la matrice inverse d'autocorrélation du signal commun de cellule selon la position d'échantillonnage et en combinaison avec un indice d'antenne.

8. Dispositif de suppression de brouillage selon la revendication 7, dans lequel le module de détermination (21) est en outre configuré pour :

calculer une matrice d'autocorrélation du signal commun de cellule selon les données d'antenne d'échantillonnage de liaison montante ; et
obtenir la matrice inverse d'autocorrélation du signal commun de cellule selon la matrice d'autocorrélation du signal commun de cellule.

9. Dispositif de suppression de brouillage selon la revendication 8, dans lequel le module de mise en correspondance (22) est configuré pour :

réaliser la mise en correspondance de trajets multiples pour l'utilisateur spécifié selon les données d'antenne d'échantillonnage de liaison montante avant que le module de détermination (21) ne calcule la matrice d'autocorrélation du signal commun de cellule selon les données d'antenne d'échantillonnage de liaison montante ;
réaliser la mise en correspondance de trajets multiples pour l'utilisateur spécifié selon les données d'antenne d'échantillonnage de liaison montante après que le module de détermination (21) obtienne la matrice inverse d'autocorrélation du signal commun de cellule selon la matrice d'autocorrélation du signal commun de cellule ; ou
réaliser la mise en correspondance de trajets multiples pour l'utilisateur spécifié selon les données d'antenne d'échantillonnage de liaison montante après que le module de détermination (21) calcule la matrice d'autocorrélation du signal commun de cellule selon les données d'antenne d'échantillonnage de liaison montante et avant que le module de détermination (21) n'obtienne la matrice inverse d'autocorrélation du signal commun de cellule selon la matrice d'autocorrélation du signal commun de cellule.

**10.** Dispositif de suppression de brouillage selon la revendication 8, dans lequel le module de détermination (21) est en outre configuré pour :
calculer la matrice d'autocorrélation du signal commun de cellule selon un indice de position d'échantillonnage et un indice de puce.

**11.** Dispositif de suppression de brouillage selon la revendication 7, dans lequel le module de mise en correspondance (22) est en outre configuré pour :

rechercher un ou plusieurs trajets multiples avec le même délai sur de multiples antennes de l'utilisateur spécifié dans la cellule ;
stocker les trajets multiples avec le même délai dans une même structure, dans lequel chaque information de trajets multiples est seulement stockée dans une structure.

**12.** Dispositif de suppression de brouillage selon la revendication 7, dans lequel le module d'acquisition (23) est en outre configuré pour :

pour plus d'un trajet multiple réussissant dans la mise en correspondance de trajets multiples pour l'utilisateur spécifié, l'obtention de la position d'échantillonnage selon un rapport de délai parmi le plus d'un trajet multiple réussissant dans la mise en correspondance de trajets multiples pour l'utilisateur spécifié ; ou
pour un trajet multiple échouant dans la mise en correspondance de trajets multiples pour l'utilisateur spécifié, l'obtention de la position d'échantillonnage selon le délai de trajets multiples sur le trajet multiple échouant dans la mise en correspondance de trajets multiples pour l'utilisateur spécifié.

**13.** Support de stockage informatique, dans lequel le support de stockage informatique stocke des instructions exécutables sur ordinateur qui, lorsqu'elles sont exécutées par un ordinateur, amènent l'ordinateur à réaliser le procédé de suppression de brouillage selon l'une quelconque des revendications 1 à 6.

Determine an autocorrelation inverse matrix of a cell common signal according to uplink sampling antenna data /101

Perform multipath matching for a specified user according to the uplink sampling antenna data /102

Acquire an autocorrelation inverse matrix of the specified user signal from the autocorrelation inverse matrix of the cell common signal according to a result of the multipath matching for the specified user and multipath information /103

Calculate a combined weight for the specified user according to a channel estimation value of the specified user and the autocorrelation inverse matrix of the specified user signal /104

Modulate and demodulate a data channel of the specified user based on the combined weight for the specified user /105

**FIG. 1**

EP 3 557 771 B1

FIG. 2

FIG. 3

**FIG. 4**

User 1

$T_C$

0

**FIG. 5**

Result 1 of multipath matching → Sampling position 1 → $R\_rake(1)$

Antenna index of multipath {1, 2, 3, 4}

Result 2 of multipath matching → Sampling position 3 → $R\_rake(3)$

Antenna index of multipath {1, 2}

Result 3 of multipath matching → Sampling position 7 → $R\_rake(7)$

Antenna index of multipath {3, 4}

Result 4 of multipath matching → Sampling position 1 → $R\_rake(1)$

Antenna index of multipath {2}

Result 5 of multipath matching → Sampling position 6 → $R\_rake(6)$

Antenna index of multipath {1, 3, 4}

**FIG. 6**

**FIG. 7**

**FIG. 8**

**FIG. 9**

FRC1, UE1:PA3, UE2:PA3, Amp=2

**FIG. 10**

**FIG. 11**

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013025134 A1

**Non-patent literature cited in the description**

- **T. CLEVORN et al.** Low-Complexity Finger-Wise Interference Cancellation for Rake Receivers with Receive Diversity. *2010 IEEE 72nd Vehicular Technology Conference - Fall,* 2010, 1-5